# EUROPEAN PATENT APPLICATION

(11) **EP 2 447 232 A1**
(43) Date of publication of application: **02.05.2012**
(21) Application number: 10188843.6
(22) Date of filing: 26.10.2010
(51) Int. Cl.: C04B 28/36, C04B 40/00, C08L 95/00, E01C 7/00

(54) **Sulphur cement products**

(71) Applicant: Shell Internationale Research Maatschappij B.V., 2596 HR The Hague (NL)
(72) Inventor: Antonio, Nelson Bert, Al Rayyan, Education City, Doha, 91791 (QA); Medley, Justus Gean, Al Rayyan, Education City, Doha, 91791 (QA); Sunifar, Parilakathoottu Aboobacker, Al Rayyan, Education City, Doha, 91791 (QA)
(74) Representative: Matthezing, Robert Maarten

(57) **Abstract**

Light-coloured sulphur sulphur cement products are disclosed. The sulphur cement products comprise from 0 to 1wt% sulphur modifier chosen from the group consisting of organosilanes and organotitanates; from 0 to 0.1wt% sulphur modifier chosen from olefinic modifiers; filler; a white pigment and a magenta pigment.

## Description

The present invention provides sulphur cement products including sulphur cement, sulphur mortar and sulphur concrete. The invention also provides a process for the preparation of sulphur cement products. The invention also provides a sulphur cement pre-composition and a wax-based pre-composition that can be used in the preparation of sulphur cement products.

### Background of the Invention

Elemental sulphur or modified sulphur can be used to bind aggregate and filler, thereby providing sulphur cement products such as sulphur mortar and sulphur concrete. Sulphur concrete can be used in a variety of pre-cast concrete applications such as marine defences, paving slabs, road barriers and retaining walls.

There is a market demand for white concrete. Concrete articles such as kerbstones are often painted white, and further painting is needed when the paint becomes scraped or chipped. White concrete can be used in instead of painted concrete, avoiding the need for painting. Sulphur cement products tends to be yellow due to the colour contributed by the sulphur. The colour of the sulphur cement products can be further darkened by olefinic modifiers such as 5 ethylidene-2-norbornene (ENB), 5 vinyl-2-norbornene (VNB), dicyclopentadiene, limonene or styrene, that are commonly used to modify sulphur. The colour can also be darkened by fillers such as fly ash or carbon black, or by aggregates such as iron oxide aggregates.

The present inventors have sought to provide sulphur cement products that are lighter than conventional sulphur cement products and that preferably are white in appearance.

### Summary of the Invention

The present inventors have surprisingly found that by incorporating both a white pigment and a magenta pigment into sulphur cement products they can produce a sulphur cement product that is light-coloured.

Accordingly, the present invention provides a sulphur cement product comprising
(a) sulphur;
(b) from 0 to 1wt% sulphur modifier chosen from the group consisting of organosilanes and organotitanates;
(c) from 0 to 0.1wt% sulphur modifier chosen from olefinic modifiers;
(d) filler;
(e) from 0.5 to 5wt% white pigment; and
(f) from 0.001 to 0.5wt% magenta pigment.

All weight percentages are based upon the weight of the sulphur cement product.

The white and magenta pigments impart a white (rather than yellow) colour to the sulphur cement product. Limiting the amount of olefinic sulphur modifier to less than 0.1wt% helps ensure that the sulphur cement product is light-coloured rather than dark.

In a further aspect, the present invention provides a sulphur cement pre-composition, comprising
(i) sulphur,
(ii) from 0 to 1wt% sulphur modifier chosen from the group consisting of organosilanes and organotitanates;
(iii) from 0 to 0.1wt% sulphur modifier chosen from olefinic modifiers;
(iv) from 0.5 to 5wt% white pigment; and
(v) from 0.001 to 0.5wt% magenta pigment.

All weight percentages are based upon the weight of the sulphur cement pre-composition. The sulphur cement pre-composition is suitably used in a process for the preparation of the sulphur cement products of the invention.

In a yet further aspect, the invention provides a wax-based pre-composition comprising
(i) wax;
(ii) from 0 to 1wt% sulphur modifier chosen from the group consisting of organosilanes and organotitanates;
(iii) from 0 to 0.1wt% sulphur modifier chosen from olefinic modifiers;
(iv) from 0.5 to 5wt% white pigment; and
(v) from 0.001 to 0.5wt% magenta pigment.

All weight percentages are based upon the weight of the wax-based pre-composition. The wax-based pre-composition is suitably used in a process for the preparation of the sulphur cement products according to the invention.

In a yet further aspect, the invention provides a process for the preparation of a sulphur cement product comprising the steps of:
(a) admixing sulphur; from 0 to 1wt% sulphur modifier chosen from the group consisting of organosilanes and organotitanates; from 0 to 0.1wt% sulphur modifier chosen from olefinic modifiers; filler; from 0.5 to 5wt% white pigment; and from 0.001 to 0.5wt% magenta pigment; at a temperature at which sulphur is molten to form a molten sulphur cement product and
(b) solidifying the molten sulphur cement product.

Weight percentages are based upon the weight of the sulphur cement product.

### Detailed Description of the Invention

The term "sulphur cement product" refers to a composite comprising at least sulphur and filler, and optionally also comprising fine aggregate and/or coarse aggregate. Fillers and aggregate are particulate inorganic materials. Fillers have an average particle size in the range of from 0.1 µm to 0.1 mm. Fine aggregate has an average particle size in the range of from 0.1 to 5mm. Coarse aggregate has an average particle size in the range of from 5 to 40mm. Sulphur cement comprises sulphur and filler, but does not comprise aggregate. Sulphur mortar comprises sulphur, filler and fine aggregate, but does not comprise coarse aggregate. Sulphur concrete comprises sulphur, filler, coarse aggregate and optionally fine aggregate.

The amounts of sulphur, filler and aggregate in the sulphur cement products of the invention can be chosen by the skilled person in view of the proposed application of the sulphur cement product. The skilled person will seek to ensure that sufficient sulphur is incorporated to bind the filler and aggregate, that sufficient filler and aggregate are incorporated to provide mechanical strength and that the balance of components provides a mixture with suitable workability for the proposed application. Sulphur cement preferably comprises from 50 to 98wt% sulphur and from 1 to 50wt% filler. Sulphur mortar preferably comprises from 5 to 40wt% sulphur, from 45 to 90wt% fine aggregate and from 1 to 10wt% filler; more preferably from 5 to 30wt% sulphur, from 55 to 75wt% fine aggregate and from 3 to 8wt% filler. Sulphur concrete preferably comprises from 5 to 40wt% sulphur, from 25 to 50wt% coarse aggregate, from 20 to 40wt% fine aggregate and from 1 to 10wt% filler; more preferably from 5 to 30wt% sulphur, from 30 to 40wt% coarse aggregate, from 25 to 35wt% fine aggregate and from 3 to 8wt% filler.

The filler and aggregates in the sulphur cement products of the invention are preferably chosen from light-coloured filler and aggregates to ensure that the sulphur cement product is light-coloured. Suitable light-coloured coarse aggregates are limestones, certain grades of granite and marble chip. A suitable light-coloured fine aggregate is sand. Suitable light-coloured fillers are calcium carbonate, gabbro dust and limestone dust. Aggregates and fillers that are dark-coloured are preferably not used in the sulphur cement products of the invention. Any aggregates or filler that contain iron oxide, fly ash or carbon black are likely to be dark-coloured.

The sulphur concrete comprises from 0 to 1wt% sulphur modifier chosen from the group consisting of organosilanes and organotitanates. Sulphur modifiers are known to the skilled person and improve the durability of sulphur cement products. The inventors have found that organosilane and organotitanate modifiers do not contribute to the colour of sulphur cement products and are therefore particularly suitable when attempting to prepare light-coloured sulphur cement products. Organosilanes are compounds having at least one carbon-silicon bond or at least one carbon-oxygen-silicon group, and organotitanates are compounds having at least one carbon-titanium bond or at least one carbon-oxygen-titanium group.

Preferred organosilanes are organosilanes of the general molecular formula (I):

(R¹O)₃Si-A-Si(OR²)₃ (I)

wherein R¹ and R² are independently C₁₋₆ alkyl and A is a divalent functional group comprising one or more groups chosen from thiol, sulphide, amine or alkenyl groups. Preferably R¹ and R² are ethyl or methyl groups. Preferably A is a polysulphide group of formula -(CH₂)ₓ₋S_{y}-(C H₂)_{z}- wherein x is an integer from 1 to 4, y is an integer from 2 to 8, and z is an integer from 1 to 4. Most preferably x and z are the same and y is from 2 to 6. Particularly preferred organosilanes are bis(3-triethoxysilylpropyl)tetrasulphide and bis(3-triethoxysilylpropyl)disulphide.

The organosilane is alternatively of general formula (II):

(R³O)₃Si-A' (II)

wherein R³ is C₁₋₆ alkyl and A' is a univalent functional group comprising one or more groups chosen from thiol, sulphide, amine or alkenyl groups. Preferably R³ is an ethyl or methyl group. Preferably, A' is a thiol group or sulphide group, having the formula-(CH₂)ₚ-S_{q}-(CH₂)ᵣ-H, wherein p is an integer from 1 to 4, q is an integer from 1 to 8 and r is 0 or an integer from 1 to 4. In one embodiment, q is 1 and r is 0, such that A' is a thiol group. In another embodiment, q is from 2 to 8 and r is from 1 to 4, such that A' is a polysulphide group. In another preferred embodiment, A' is a primary amine group of formula -(CH₂)ₙ-NH₂, wherein n is an integer from 1 to 4. In yet another preferred embodiment, A' is an alkenyl group of formula (CH₂)ₘ-X, wherein m is an integer from 0 to 4 and X is an alkenyl group. Possible X groups are shown below:

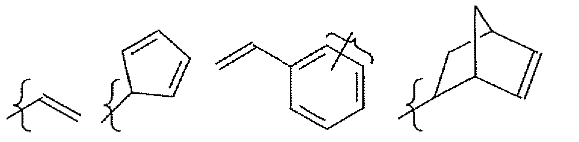

Preferred organotitanates are of general formula (III) or (IV): 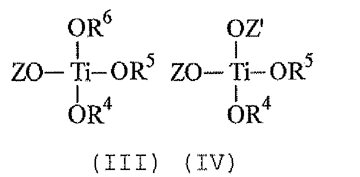 wherein OR⁴, OR⁵ and OR⁶ are independently chosen from acyloxy, phosphato, pyrophosphato, sulfonato and glycoxy; and ZO and Z'O are independently chosen from alkoxy or neoalkoxy group or ZO and Z'O together form a glycoxy group. The OR⁴, OR⁵ and OR⁶ groups are preferably acyloxy, dialkyl phosphato, dialkyl pyrophosphato or alkylbenzene sulfonato groups. If ZO and/or Z'O are alkoxy groups, Z and/or Z' are preferably C₁-C₂₅ alkyl. Z and Z' are most preferably isopropyl. Organotitanates with neoalkoxy groups are described further in US 4,623,738.

Alternatively the organotitanates may be as described in WO 2008/152054.

The amount of sulphur modifier chosen from the group consisting of organosilanes and organotitanates is preferably from 0.001 to 1wt%, more preferably from 0.01 to 0.5wt% and most preferably from 0.01 to 0.2wt%. Sufficient modifier should be included to provide a sulphur cement product with acceptable durability. However, the organosilane or organotitanate modifier is typically one of the most expensive components in the concrete, so it is not desirable to include more modifier than is needed.

The sulphur cement products according to the invention comprise from 0 to 0.1wt% sulphur modifier chosen from olefinic modifiers. The inventors have found that olefinic modifiers typically darken the colour of sulphur cement products, so to achieve a light-coloured product the amount of olefinic modifier is limited to less than 0.1wt%, preferably less than 0.01wt%. Most preferably the sulphur cement product contains 0wt% olefinic modifier. Known olefinic modifiers include 5 ethylidene-2-norbornene (ENB), 5 vinyl-2-norbornene (VNB), dicyclopentadiene, limonene and styrene.

The sulphur cement products of the invention comprise from 0.5 to 5wt% white pigment. Less than 0.5wt% pigment is unlikely to provide a sufficiently light-coloured sulphur concrete product. More than 5wt% white pigment is unlikely to further improve the colour of the product and is undesirable as the pigment is an expensive component of the sulphur concrete. A preferred white pigment is titanium dioxide.

The sulphur cement product of the invention comprises from 0.001 to 0.5wt% magenta pigment. Less than 0.001wt% of magenta pigment may provide a sulphur cement product that appears yellow. More than 0.5wt% magenta pigment may provide a sulphur cement product that appears pink. The magenta pigment is suitably heat stable at the temperatures typically used in the manufacture of sulphur cement products (approximately 120°C to 150°C). A suitable magenta pigment is Monolite Red 312201 from Heubach GmbH, Germany.

Additional components such as glass or crushed ceramic may also be incorporated into the sulphur cement products of the invention.

The sulphur cement products of the invention are suitably prepared by a process wherein all the components are admixed at a temperature at which the sulphur is molten, i.e. typically above 120°C, preferably in the range of from 120 to 150°C, more preferably in the range of from 125 to 140°C. The admixture is preferably poured into a mould. The sulphur cement product is then solidified by cooling to a temperature at which the sulphur solidifies. After cooling, the sulphur cement product can be demoulded.

In the process of the invention, a selection of the components may be supplied to the mixing step in the form of a pre-composition or masterbatch. For example, the sulphur, sulphur modifier, white pigment and magenta pigment may be supplied as a sulphur pre-composition. Therefore, in a further aspect, the present invention provides a sulphur cement pre-composition, comprising
(i) sulphur,
(ii) from 0 to 1wt% sulphur modifier chosen from the group consisting of organosilanes and organotitanates;
(iii) from 0 to 0.1wt% sulphur modifier chosen from olefinic modifiers;
(iv) from 0.5 to 5wt% white pigment; and
(v) from 0.001 to 0.5wt% magenta pigment.

All weight percentages are based upon the weight of the sulphur cement pre-composition.

Alternatively, the sulphur modifier, white pigment and magenta pigment may be supplied as a wax-based pre-composition. The wax functions primarily as a carrier material. Therefore, in a yet further aspect, the invention provides a wax-based pre-composition comprising
(i) wax;
(ii) from 0 to 1wt% sulphur modifier chosen from the group consisting of organosilanes and organotitanates;
(iii) from 0 to 0.1wt% sulphur modifier chosen from olefinic modifiers;
(iv) from 0.5 to 5wt% white pigment; and
(v) from 0.001 to 0.5wt% magenta pigment.

All weight percentages are based upon the weight of the wax-based pre-composition.

Sulphur cement products produced according to the invention can be used in a variety of applications. Sulphur concrete may be used in pre-cast concrete applications such as marine defences, paving slabs, road barriers and retaining walls. The light colour of the products is visually appealing and eliminates the need for painting.

### Example

The invention is further illustrated by means of the following non-limiting example.

Sulphur, organosilane modifier (bis(3-triethoxysilylpropyl)tetrasulphide, TESPT), limestone, sand, calcium carbonate, white pigment (titanium dioxide) and magenta pigment (Monolite Red 312201 from Heubach GmbH) were mixed in the amounts shown in table 1 at 140°C until an homogeneous mixture was obtained. The mixture was then poured into a cubic steel mould (100mm x 100mm x 100mm) that was pre-heated to 140°C. The mixture was allowed to cool and then demoulded.

**Table 1**

| | Weight (g) |
|---|---|
| Sulphur | 464 |
| TESPT | 1.6 |
| Limestone (20mm) | 512 |
| Limestone (10mm) | 458 |
| Washed sand | 942 |
| Calcium carbonate | 210 |
| Titanium Dioxide | 108 |
| Monolite Red | 0.27 |

The resulting sulphur concrete was sufficiently light to be considered white concrete by the construction industry.

## Claims

1. A sulphur cement product comprising
(a) sulphur;
(b) from 0 to 1wt% sulphur modifier chosen from the group consisting of organosilanes and organotitanates;
(c) from 0 to 0.1wt% sulphur modifier chosen from olefinic modifiers;
(d) filler;
(e) from 0.5 to 5wt% white pigment; and
(f) from 0.001 to 0.5wt% magenta pigment;
wherein all weight percentages are based upon the weight of the sulphur cement product.

2. A sulphur cement pre-composition, comprising
(i) sulphur;
(ii) from 0 to 1wt% sulphur modifier chosen from the group consisting of organosilanes and organotitanates;
(iii) from 0 to 0.1wt% sulphur modifier chosen from olefinic modifiers;
(iv) from 0.5 to 5wt% white pigment; and
(v) from 0.001 to 0.5wt% magenta pigment;
wherein all weight percentages are based upon the weight of the sulphur cement pre-composition.

3. A wax-based pre-composition, comprising
(i) wax;
(ii) from 0 to 1wt% sulphur modifier chosen from the group consisting of organosilanes and organotitanates;
(iii) from 0 to 0.1wt% sulphur modifier chosen from olefinic modifiers;
(iv) from 0.5 to 5wt% white pigment; and
(v) from 0.001 to 0.5wt% magenta pigment;
wherein all weight percentages are based upon the weight of the wax-based pre-composition.

4. A sulphur cement product according to claim 1, a sulphur cement pre-composition according to claim 2 or a wax-based pre-composition according to claim 3, comprising from 0.001 to 1wt% sulphur modifier chosen from the group consisting of organosilanes and organotitanates.

5. A sulphur cement product according to claim 4, a sulphur cement pre-composition according to claim 4, or a wax-based pre-composition according to claim 4, wherein the sulphur modifier chosen from the group consisting of organosilanes and organotitanates is an organosilane of the general molecular formula (I):
(R¹O)₃Si-A-Si(OR²)₃ (I)
wherein R¹ and R² are independently C₁₋₆ alkyl and A is a divalent functional group comprising one or more groups chosen from thiol, sulphide, amine or alkenyl groups.

6. A process for the preparation of a sulphur cement product comprising the steps of:
(a) admixing sulphur, from 0 to 1wt% sulphur modifier chosen from the group consisting of organosilanes and organotitanates, from 0 to 0.1wt% sulphur modifier chosen from olefinic modifiers, filler, from 0.5 to 5wt% white pigment, and from 0.001 to 0.5wt% magenta pigment, wherein all weight percentages are based upon the weight of the sulphur cement product, at a temperature at which sulphur is molten to form a molten sulphur cement product and
(b) solidifying the molten sulphur cement product.
